# EUROPÄISCHE PATENTANMELDUNG

(11) **EP 2 164 294 A1**
(43) Veröffentlichungstag der Anmeldung: **17.03.2010**
(21) Anmeldenummer: 09169804.3
(22) Anmeldetag: 09.09.2009
(51) Int. Cl.: H05B 1/02, H02J 9/00

(54) **Schaltung eines Haushaltsgeräts sowie Verfahren zum Betrieb des Haushaltsgeräts**

(30) Priorität: 10.09.2008 DE 102008041968
(71) Anmelder: BSH Bosch und Siemens Hausgeräte GmbH, 81739 München (DE)
(72) Erfinder: Has, Uwe, 84579, Unterneukirchen (DE); Höck, Florian, 83334, Inzell (DE)

(57) **Zusammenfassung**

Es wird eine Schaltung eines Haushaltsgeräts angegeben mit einem Mikrokontroller, den ein Energiespeicher zumindest zeitweise mit elektrischer Energie versorgt, wobei der Energiespeicher bei Unterschreiten einer Mindestspannung über eine Netzspannung aufladbar ist und wobei die Netzspannung bei einer vorgegebenen oberen Versorgungsspannung von der Schaltung im wesentlichen abschaltbar ist. Ferner wird ein Verfahren zum Betrieb des Haushaltsgeräts angegeben.

## Beschreibung

Die Erfindung betrifft eine Schaltung eines Haushaltsgeräts sowie ein Verfahren zum Betrieb des Haushaltsgeräts.

Bekannt sind Haushaltsgeräte mit einem berührempfindlichen Schalter zu derer Aktivierung. So kann ein Benutzer beispielsweise durch eine Berührung eines Schaltelements einen Herd einschalten oder ausschalten.

Beispielsweise sind Herde bekannt, die durch eine Glaskeramik hindurch bedient werden können. Hierbei werden markierte Elemente auf der Glasoberfläche oder auf einer Aluminiumleiste ausgewiesen. Eine Bedienung eines solchen markierten Elements kann sensorisch erkannt werden. Mögliche Sensoren sind z.B. kapazitive Sensoren, optische Sensoren oder Piezoelemente.

Hierbei ist es von Nachteil, dass auch bei inaktivem Haushaltsgerät, also während eines Standby-Betriebs, zumindest ein Teil des Haushaltsgerät dauerhaft mit der Netzspannung versorgt wird, um beispielsweise ein Einschaltsignal des berührungsempfindlichen Schalters detektieren zu können. Hierbei wird von dem Haushaltsgerät permanent elektrische Leistung z.B. in einer Größenordnung von 2 Watt verbraucht.

Die **Aufgabe** der Erfindung besteht darin, die vorstehend genannten Nachteile zu vermeiden und insbesondere eine Schaltung anzugeben, die einen effizienten Standby-Betrieb eines Haushaltsgeräts, insbesondere eines Herds, ermöglicht.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird eine Schaltung eines Haushaltsgeräts angegeben
- mit einem Mikrokontroller, den ein Energiespeicher zumindest zeitweise mit elektrischer Energie versorgt,
- wobei der Energiespeicher bei Unterschreiten einer Mindestspannung über eine Netzspannung aufladbar ist und
- wobei die Netzspannung bei einer vorgegebenen oberen Versorgungsspannung von der Schaltung im wesentlichen abschaltbar ist.

Hierbei sei angemerkt, dass der Mikrokontroller auch als ein (Mikro-)Prozessor und/oder als ein Rechner mit üblicher peripherer Beschaltung, z.B. Ein-/Ausgabeeinheit, Speicher, Bussystem, ausgeführt sein kann.

Bei dem Haushaltsgerät kann es sich insbesondere um ein Küchengerät, z.B. um einen Herd, handeln.

Ferner sei angemerkt, dass die Schaltung des Haushaltsgeräts insbesondere einen Teil einer Versorgungsschaltung, z.B. einer Stromversorgungsschaltung bzw. einer Standby-Schaltung umfassen kann. So kann die hierin beschriebene Schaltung separat zu einer Stromversorgung des Haushaltsgeräts oder zusammen mit dieser integriert ausgeführt sein.

Die hier vorgeschlagene Schaltung ermöglicht es, dass insbesondere im Standby-Betrieb das Haushaltsgerät zumindest zeitweise von der Netzspannung getrennt werden kann und somit nicht dauerhaft Strom aus dem Versorgungsnetz benötigt. In dem Standby-Betrieb ist das Haushaltsgerät beispielsweise bis auf eine Überwachung einer Einschaltfunktion abgeschaltet. Der Energiespeicher versorgt den Mikrokontroller der hierin beschriebenen Schaltung mit Energie, wobei vorzugsweise der Mikrokontroller sicherstellen kann, dass der Energiespeicher (immer wieder) mittels der Netzspannung auf- bzw. nachgeladen wird. Entsprechend agiert der Mikrokontroller als Regler mit einer Hysterese derart, dass bei Unterschreiten der Mindestspannung der Energiespeicher geladen wird und dass bei Erreichen bzw. Überschreiten der oberen Versorgungsspannung die Netzspannung abgeschaltet.

Hieraus ergibt sich vorteilhaft, dass das Haushaltsgerät in dem Standby-Betrieb im zeitlichen Mittel deutlich weniger Energie benötigt als im Falle einer dauerhaft mit der Netzspannung verbundenen Überwachungsschaltung.

Eine Weiterbildung ist es, dass ein Schaltelement vorgesehen ist, anhand dessen das Haushaltsgerät aktivierbar und/oder deaktivierbar ist.

Insbesondere können ein Schaltelement zum Einschalten des Haushaltsgeräts und ein Schaltelement zum Ausschalten des Haushaltsgeräts vorgesehen sein.

Eine andere Weiterbildung ist es, dass das Schaltelement einen Sensor, insbesondere mindestens einen der folgenden Sensoren umfasst:
- einen Piezosensor;
- einen kapazitiven Sensor;
- einen optischen Sensor.

Insbesondere ist es eine Weiterbildung, dass anhand des Mikrokontrollers ein Sensorsignal des Schaltelements detektierbar ist anhand dessen der Mikrokontroller das Haushaltsgerät einschaltet und/oder ausschaltet.

Insbesondere kann der Mikrokontroller hierzu eine Steuerleitung aufweisen bzw. ein Steuersignal bereitstellen anhand dessen eine Stromversorgung für das Haushaltsgerät durchgeschaltet bzw. unterbrochen wird.

Besonders vorteilhaft ist es, dass das Sensorsignal bzw. eine Form des Sensorsignals von dem Mikrokontroller auswertbar ist insbesondere derart, dass das Haushaltsgerät nur ein- bzw. ausgeschaltet wird wenn das Sensorsignal im wesentlichen eine vorgegebene Form aufweist. Hierdurch kann zuverlässig und fehlertolerant ein falsches Sensorsignal von einem Ein- bzw. Ausschaltsignal unterschieden werden.

Auch ist es eine Weiterbildung, dass anhand des Mikrokontrollers das Unterschreiten der Mindestspannung ermittelbar ist. Entsprechend kann anhand des Mikrokontrollers die obere Versorgungsspannung ermittelbar sein.

Vorteilhaft stellt somit der Mikrokontroller den Regler (mit Hysterese) für das Laden des Energiespeichers dar.

Ferner ist es eine Weiterbildung, dass der Energiespeicher einen Kondensator, insbesondere einen Super-Cap und/oder einen Gold-Cap Kondensator, umfasst.

Im Rahmen einer zusätzlichen Weiterbildung ist parallel zu dem Energiespeicher eine Zener-Diode zur Spannungsbegrenzung vorgesehen.

Die vorstehend genannte Aufgabe wird auch gelöst durch ein Verfahren zum Betrieb eines Haushaltsgeräts umfassend einen Mikrokontroller, der derart eingerichtet ist, dass die folgenden Schritte durchführbar sind:
- Ein Energiespeicher wird mittels einer Netzspannung aufgeladen bis eine obere Versorgungsspannung erreicht wird;
- das Haushaltsgerät wird von der Netzspannung getrennt und der Mikrokontroller wird von dem Energiespeicher mit elektrischer Energie versorgt;
- bei Erreichen einer unteren Versorgungsspannung wird der Energiespeicher mittels der Netzspannung aufgeladen.

Die vorstehenden Schritte werden vorzugsweise iterativ insbesondere während eines Standby-Betriebs des Haushaltsgeräts durchgeführt.

Eine Weiterbildung ist es, dass die obere Versorgungsspannung und die untere Versorgungsspannung anhand des Mikrokontrollers detektiert werden.

Eine nächste Weiterbildung besteht darin, dass anhand des Mikrokontrollers ein Sensorsignal eines Schaltelements detektiert wird und anhand dessen von dem Mikrokontroller das Haushaltsgerät eingeschaltet oder ausgeschaltet wird.

Insbesondere stammt das Sensorsignal von einem der vorstehend erwähnten Sensoren.

Eine Ausgestaltung ist es, dass die Art und/oder Form des Sensorsignals anhand des Mikrokontrollers ausgewertet wird.

Eine alternative Ausführungsform besteht darin, dass das Sensorsignal mit einem vorgegebenen Signal und/oder einem parametrisierten abgespeicherten Signal verglichen wird.

Insbesondere kann bei einer geeigneten Ähnlichkeit des von dem Schaltelement detektierten Signals und einem abgespeicherten bzw. vorgegebenen oder parametrisierten Signal das Haushaltsgerät eingeschaltet bzw. ausgeschaltet werden.

Ausführungsbeispiele der Erfindung werden nachfolgend anhand der Zeichnungen dargestellt und erläutert.

Es zeigen:
- Fig.1: ein Flussdiagramm zum Betrieb eines Reglers mit Hysterese zur Aufladung eines Energiespeichers;
- Fig.2: eine Ladeschaltung für einen Kondensator als Energiespeicher zum Betrieb eines Mikrokontrollers;
- Fig.3: eine Schaltung mit einem Piezoelement, wie es als Schaltelement zur Aktivierung eines Haushaltsgeräts einsetzbar ist;
- Fig.4: eine Beschaltung eines Mikrokontroller insbesondere zur Regelung der Ladung des Energiespeichers, zur Erfassung und Verarbeitung von Sensorsignalen und zur Ein- bzw. Abschaltung des Haushaltsgeräts;
- Fig.5: eine Schaltung umfassend die Teilschaltungen gemäß Fig.2 bis Fig.4.

Moderne handelsübliche Mikrokontroller können mit sich ändernden ("gleitenden") Eingangsspannungen in einem Bereich von beispielsweise 2,5V bis 5,5V betrieben werden.

Vorzugsweise ist dabei zu beachten, dass ein Gradient des Spannungsanstiegs in diesem Bereich nicht eine vorgegebene Spezifikation für den Mikrokontroller überschreitet. Weiterhin ist diese Eingangsspannung vorzugsweise weitgehend frei von Netzstörungen. Erreicht die Eingangsspannung eine vorgegebene minimale Spannung, kann der Mikrokontroller kontrolliert außer Betrieb gesetzt werden (Fehlerschutz).

Somit ist es möglich, den Mikrokontroller durch eine sich in dem vorgegebenen Bereich veränderbare Eingangsspannung zu betreiben. Eine solche Eingangsspannung kann mittels eines Energiespeichers bereitgestellt werden. Insbesondere ist es möglich, dass die Eingangsspannung für den Mikrokontroller durch eine Lade- bzw. Entladekurve eines Kondensators bereitgestellt wird. Beispielsweise kann als Kondensator ein sog. Super-Cap oder Gold-Cap Kondensator eingesetzt werden.

Vorzugsweise wird der Kondensator mittels eines Zweipunktreglers mit Hysterese geladen. Somit ermöglicht der Zweipunktregler, dass der Kondensator sich in einem geladenen Zustand befindet und somit den Mikrokontroller mit Energie versorgen kann.

Eine variierende Belastung des Kondensators hat zur Folge, dass sich die Dauer des Entlade- bzw. Ladevorgangs verändert. Die benötigte Leistung ergibt sich durch zeitliche Mittelung über mehrere Ladevorgänge.

Beispielhaft wird nachfolgend als Energiespeicher ein Kondensator angenommen.

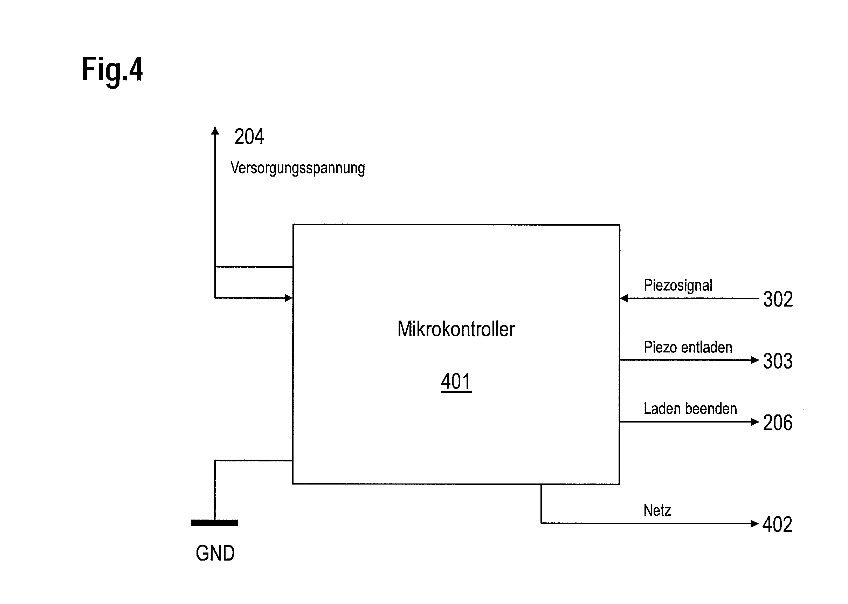

Der hierin erwähnte Mikrokontroller ist z.B. im Zusammenhang mit Fig.4 detailliert beschrieben.

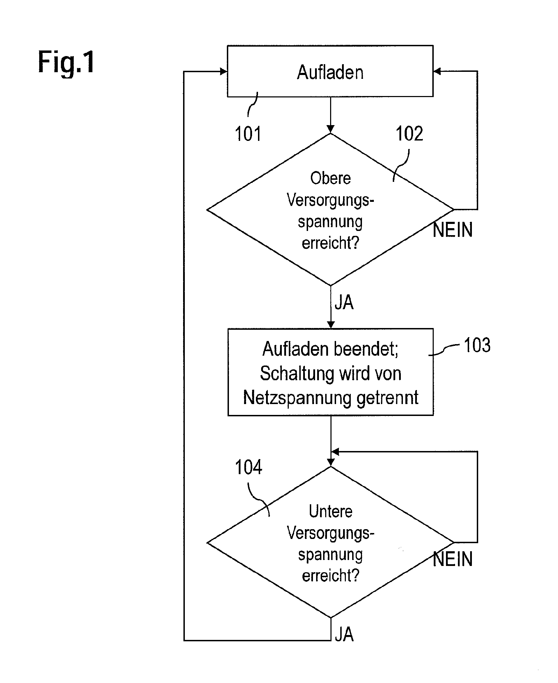

**Fig.1** zeigt beispielhaft ein Diagramm zum Betrieb eines derartigen Zweipunktreglers mit Hysterese. In einem Schritt 101 wird der Kondensator aufgeladen und in einer Abfrage 102 wird geprüft, ob eine vorgegebene obere Versorgungsspannung für den Kondensator erreicht ist bzw. erreicht wurde. Falls nicht, wird zu dem Schritt 101 verzweigt, der Kondensator wird weiter aufgeladen. Falls die obere Versorgungsspannung erreicht ist, wird zu einem Schritt 103 verzweigt, das Aufladen des Kondensators wird beendet. Vorzugsweise wird nun die Schaltung von der Netzspannung getrennt, der Kondensator dient als Energiespeicher zur Versorgung des Mikrokontrollers.

In einer Abfrage 104 wird geprüft, ob der Ladezustand des Kondensators eine untere Versorgungsspannung erreicht hat. Sobald dies der Fall ist, wird zu dem Schritt 101 verzweigt, der Kondensator wird mittels der Netzspannung aufgeladen.

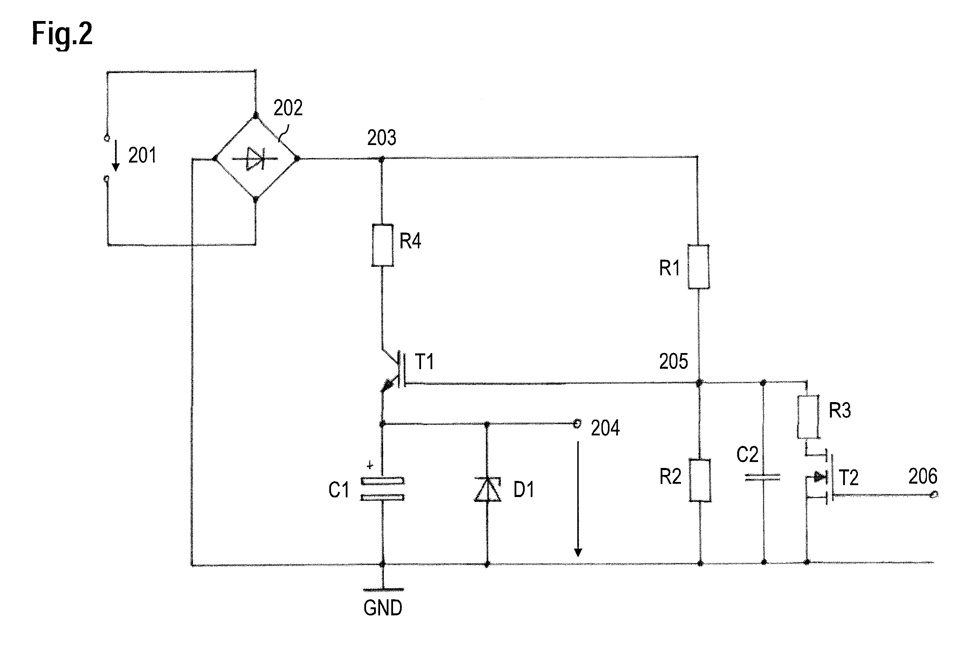

**Fig.2** zeigt eine Ladeschaltung für einen Kondensator C1. Hierbei sei angemerkt, dass es sich bei dem Kondensator C1 um jedweden Energiespeicher handeln kann. Vorteilhaft können als Kondensatoren sog. Gold-Cap oder Super-Cap Kondensatoren eingesetzt werden.

Eine Netzspannung 201 wird über einen Gleichrichter 202 in eine Gleichspannung mit einem Massepotential GND und einem positiven Anschluss (Knoten 203) konvertiert. Der Knoten 203 ist über einen Widerstand R4 mit dem Kollektor eines IGBT T1 verbunden. Der Emitter des IGBT T1 ist über den Kondensator C1 mit dem Massepotential GND verbunden. Parallel zu dem Kondensator C1 ist eine Zener-Diode D1 geschaltet, wobei die Kathode der Zener-Diode D1 mit dem Emitter des IGBT T1 verbunden ist. Somit steht parallel zu dem Kondensator C1 (und der Zener-Diode D1) eine Spannung 204 zur Verfügung, die als Betriebsspannung für den Mikrokontroller eingesetzt werden kann.

Der Gate-Anschluss des IGBT T1 ist mit einem Knoten 205 verbunden. Dieser Knoten 205 stellt weiterhin den Mittenabgriff einer Reihenschaltung aus Widerständen R1 und R2 dar, wobei der Widerstand R1 andererseits mit dem Knoten 203 und der Widerstand R2 andererseits mit dem Massepotential GND verbunden ist. Parallel zu dem Widerstand R2 sind ein Kondensator C2 sowie eine Reihenschaltung aus einem Widerstand R3 und der Drain-Source-Strecke eines n-Kanal Mosfets T2 angeordnet. Der Gate-Anschluss des Mosfets T2 ist mit einem Knoten 206 verbunden und entspricht einem Steuersignal zum Abschalten eines Ladezyklus für den Kondensator C1.

Der Gleichrichter 202 kann als ein Brückengleichrichter oder als ein Einweggleichrichter ausgeführt sein.

Nach dem Aktivieren der Schaltung steigt die Spannung an dem Gate-Anschluss des IGBT T1, der Kondensator C2 wird über die Widerstände R1 und R2 aufgeladen. Ab einer bestimmten Spannung an dem Kondensator C2 schaltet der IGBT T1 durch, der Kondensator C1 wird über den Widerstand R4 geladen.

Vorzugsweise ist der Spannungsabfall an dem Widerstand R4 und an dem IGBT T1 deutlich größer als die Spannung 204. Somit steigt die Spannung an dem Kondensator C1 im wesentlichen linear an.

Der Mikrokontroller wird über die Spannung 204 versorgt. Sobald die Spannung 204 zum Betrieb des Mikrokontrollers ausreicht, übernimmt der Mikrokontroller die Regelungsfunktion der Schaltung.

Mit Erreichen der oberen Versorgungsspannung für den Mikrokontroller schaltet der Mikrokontroller über das Steuersignal 206 den Mosfet T2 durch. Der Kondensator C2 wird entladen, der IGBT T1 sperrt. Es fließt nurmehr ein minimaler Strom über die Widerstände R1, R3 und den Mosfet T2. Der Mikrokontroller wird jetzt ausschließlich über die Spannung 204 aus dem Kondensator C1 versorgt.

In einem Fehlerfall wird die Spannung 204 mittels der Zener-Diode D1 begrenzt.

Ein Bedienelement zur Aktivierung bzw. Deaktivierung des Haushaltsgeräts kann einen Sensor, z.B. einen Piezosensor oder ein Piezoelement, aufweisen. Alternativ können kapazitive oder optische Sensoren eingesetzt werden. Vorzugsweise kann ein Mikrokontroller verwendet werden, der bereits über integrierte Auswertemöglichkeiten für beispielsweise kapazitive Sensorik verfügt.

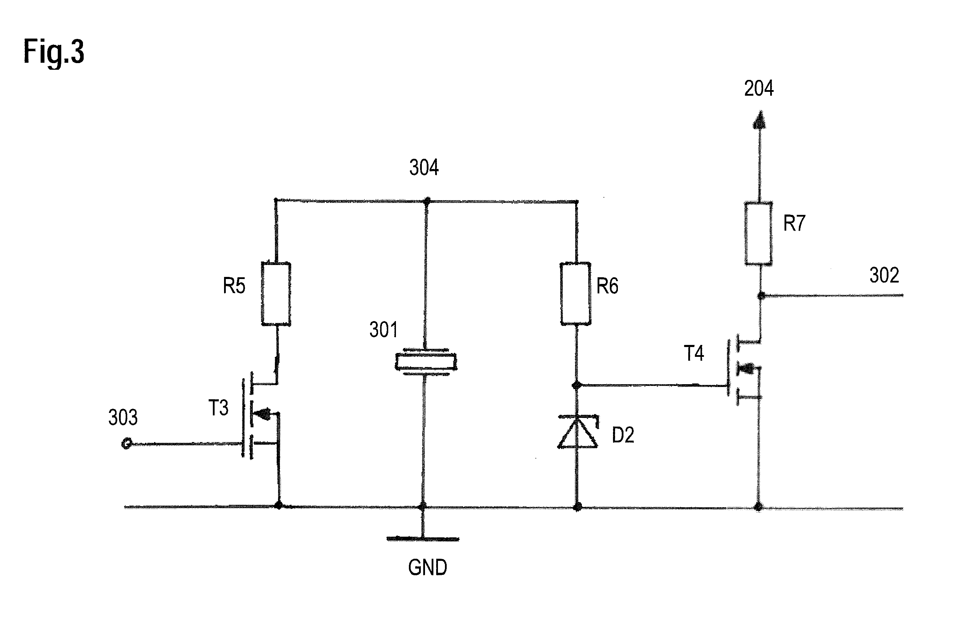

**Fig.3** zeigt ein Piezoelement 301 als Schaltelement wie es z.B. in einem Bedienelement eines Haushaltsgeräts, insbesondere eines Herds eingesetzt werden kann. Über das Piezoelement 301 kann der Herd aktiviert bzw. deaktiviert werden.

Ist der Herd ausgeschaltet, so kann über das Piezoelement 301 der Herd aktiviert werden. Hierzu ist es erforderlich, dass eine Elektronik eine derartige Aktivierung erkennt und als Folge die Netzspannung durchschaltet.

Gemäß Fig.3 ist das Piezoelement 301 einerseits mit dem Massepotential GND und andererseits mit einem Knoten 304 verbunden. Ein Steuersignal 303 zum Entladen des Piezoelements 301 ist mit dem Gate-Anschluss eines n-Kanal Mosfets T3 verbunden, dessen Source-Anschluss mit dem Massepotential GND und dessen Drain-Anschluss über einen Widerstand R5 mit dem Knoten 304 verbunden ist. Der Knoten 304 ist weiterhin über eine Reihenschaltung aus einem Widerstand R6 und einer Zener-Diode D2 mit dem Massepotential GND verbunden, wobei die Anode der Zener-Diode D2 in Richtung des Massepotentials GND weist. Der Mittenabgriff der Reihenschaltung aus dem Widerstand R6 und der Zener-Diode D2 ist mit dem Gate-Anschluss eines n-Kanal Mosfets T4 verbunden, dessen Source-Anschluss mit dem Massepotential GND und dessen Drain-Anschluss über einen Widerstand R7 mit der Spannung 204 (siehe Fig.2) verbunden ist. Der Drain-Anschluss des Mosfets T4 liefert weiterhin ein Steuersignal 302, entsprechend einer Betätigung des Piezoelements 301.

**Fig.4** zeigt den Mikrokontroller 401 in Verbindung mit den bereits in Fig.2 und Fig.3 dargestellten Spannungen und Signalen.

Vorzugsweise ist der Mikrokontroller 401 mit dem Massepotential GND verbunden. Weiterhin wird der Mikrokontroller über die Spannung 204 mit elektrischer Energie versorgt. Vorzugsweise wertet der Mikrokontroller die Höhe der Spannung 204 aus, so dass beispielsweise bei Erreichen eines vorgegebenen Schwellwerts für die Spannung 204 der Mikrokontroller einen erneuten Ladevorgang des Kondensators C1 (vergleiche Fig.1 mit zugehöriger Beschreibung) initiiert. Ein derartiges Aufladen des Kondensators C1 kann beispielsweise erreicht werden, indem der Mikrokontroller 401 das Steuersignal 206 auf logisch "0" setzt. Damit sperrt der Mosfet T2 (siehe Fig.2), der Kondensator C2 wird geladen und der IGBT T1 schaltet durch und lädt den Kondensator C1 (wieder) auf. Erreicht die Spannung 204 eine obere Versorgungsspannung, so kann der Mikrokontroller 401 entsprechend das Steuersignal 206 auf logisch "1" setzen und somit das Ende des Ladevorgangs anzeigen.

Über das Steuersignal 302 wird von dem Mikrokontroller 401 das Piezosignal ausgewertet. Hierbei kann besonders vorteilhaft die Kurvenform des Piezosignals ausgewertet werden und abhängig von dieser Kurvenform eine vorgegebene Aktion durch den Mikrokontroller 401 initiiert werden. Beispielsweise kann der Mikrokontroller 401 den Herd nur dann aktivieren, wenn das Piezosignal eine vorgegebene Kurvenform aufweist. Eine Aktivierung des Herds erfolgt anhand der Steuerleitung 402 zum Durchschalten der Netzspannung. Ebenso ist es möglich, dass der Mikrokontroller 401 den Herd ausschaltet, wenn das Piezosignal eine vorgegebene Kurvenform aufweist.

Durch den Vergleich mit einer vorgegebenen Kurvenform des Piezosignals kann von dem Mikrokontroller 401 das Piezosignal hinsichtlich einer Entscheidung bewertet werden, ob wirklich ein Signal zu Aktivierung bzw. Deaktivierung oder eine Fehlbedienung vorliegt. Insbesondere könnte der Herd aktiviert bzw. deaktiviert werden, wenn ein Benutzer eine vorgegebene Zeitdauer das Piezoelement bedient. Dieser Ansatz ermöglicht eine zuverlässige und fehlertolerante Bedienung des Haushaltsgeräts, insbesondere des hier beispielhaft erwähnten Herds.

Ein Steuersignal 303 entlädt das Piezoelement 301 (siehe Fig.3). Dies entspricht einem Zurücksetzen bzw. Entladen ("Reset") des Piezoelements und kann von dem Mikrokontroller 401 z.B. nach einem erkannten Piezosignal initiiert werden.

Hierbei sei angemerkt, dass der Mikrokontroller 401 die Netzspannung anhand der Steuerleitung 402 durchschalten und entsprechend auch eine Trennung der Netzspannung von dem Haushaltsgeräts, z.B. indem er das Steuersignal 402 auf logisch "0" setzt, erreichen kann. Beispielsweise kann die Steuerleitung mit einem Schaltelement der (zentralen) Stromversorgung für das Haushaltsgerät gekoppelt sein.

Der hier vorgestellte Ansatz ermöglicht eine deutliche Einsparung an elektrischer Energie im Standby-Betrieb des Haushaltsgeräts. So kann beispielsweise im zeitlichen Mittel die elektrische Standby-Leistung von 2 W auf 40 mW reduziert werden.

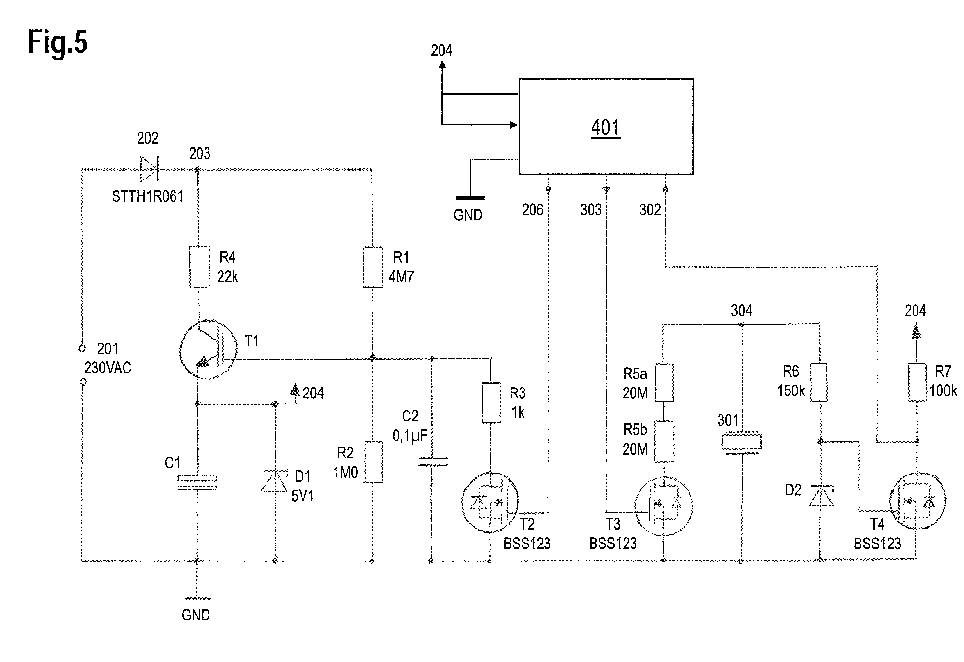

Die vollständige Schaltung umfassend die Komponenten der Figuren 2 bis 4 ist in **Fig.5** dargestellt. Die Bezugszeichen entsprechen den vorstehenden Erläuterungen. Lediglich der Widerstand R5 aus Fig.3 ist in Fig.5 als eine Reihenschaltung aus zwei Widerständen R5a und R5b dargestellt.

## Patentansprüche

1. Schaltung eines Haushaltsgeräts, .
- mit einem Mikrokontroller (401), den ein Energiespeicher (C1) zumindest zeitweise mit elektrischer Energie versorgt,
- wobei der Energiespeicher (C1) bei Unterschreiten einer Mindestspannung über eine Netzspannung (201) aufladbar ist und
- wobei die Netzspannung (201) bei einer vorgegebenen oberen Versorgungsspannung von der Schaltung im wesentlichen abschaltbar ist.

2. Schaltung nach Anspruch 1, bei der ein Schaltelement (301) vorgesehen ist anhand dessen das Haushaltsgerät aktivierbar und/oder deaktivierbar ist.

3. Schaltung nach Anspruch 2, bei der das Schaltelement (301) einen Sensor, insbesondere mindestens einen der folgenden Sensoren umfasst:
- einen Piezosensor;
- einen kapazitiven Sensor;
- einen optischen Sensor.

4. Schaltung nach einem der Ansprüche 2 oder 3, bei der anhand des Mikrokontrollers (401) ein Sensorsignal (302) des Schaltelements (301) detektierbar ist anhand dessen der Mikrokontroller (401) das Haushaltsgerät einschaltet und/oder ausschaltet.

5. Schaltung nach Anspruch 4, bei der die Art des Sensorsignals (302) anhand des Mikrokontrollers (401) auswertbar ist.

6. Schaltung nach einem der vorhergehenden Ansprüche, bei der anhand des Mikrokontrollers (401) das Unterschreiten der Mindestspannung ermittelbar ist.

7. Schaltung nach einem der vorhergehenden Ansprüche, bei der anhand des Mikrokontrollers (401) die obere Versorgungsspannung ermittelbar ist.

8. Schaltung nach einem der vorhergehenden Ansprüche, bei der der Energiespeicher (C1) einen Kondensator, insbesondere einen Super-Cap und/oder einen Gold-Cap Kondensator, umfasst.

9. Schaltung nach einem der vorhergehenden Ansprüche, bei der parallel zu dem Energiespeicher eine Zener-Diode (D1) zur Spannungsbegrenzung vorgesehen ist.

10. Verfahren zum Betrieb eines Haushaltsgeräts umfassend einen Mikrokontroller (401), der derart eingerichtet ist, dass die folgenden Schritte durchführbar sind:
- Ein Energiespeicher (C1) wird mittels einer Netzspannung aufgeladen bis eine obere Versorgungsspannung erreicht wird (101, 102);
- das Haushaltsgerät wird von der Netzspannung getrennt und der Mikrokontroller (401) wird von dem Energiespeicher (C1) mit elektrischer Energie versorgt;
- bei Erreichen einer unteren Versorgungsspannung wird der Energiespeicher (C1) mittels der Netzspannung aufgeladen (104).

11. Verfahren nach Anspruch 10, bei dem die obere Versorgungsspannung und die untere Versorgungsspannung anhand des Mikrokontrollers detektiert werden.

12. Verfahren nach einem der Ansprüche 10 oder 11, bei dem anhand des Mikrokontrollers ein Sensorsignal eines Schaltelements detektiert wird und anhand dessen von dem Mikrokontroller das Haushaltsgerät eingeschaltet oder ausgeschaltet wird.

13. Verfahren nach Anspruch 12, bei dem die Art und/oder Form des Sensorsignals anhand des Mikrokontrollers ausgewertet wird.

14. Verfahren nach Anspruch 13, bei dem das Sensorsignal mit einem vorgegebenen Signal und/oder einem parametrisierten abgespeicherten Signal verglichen wird.
